# EUROPEAN PATENT SPECIFICATION

(11) **EP 2 911 237 B1**
(45) Date of publication and mention of the grant of the patent: **19.04.2023**
(21) Application number: 15152618.3
(22) Date of filing: 27.01.2015
(51) Int. Cl.: H01Q 1/12, G01S 19/14

(54) **Receiver assembly**
Empfangsanordnung
Ensemble formant récepteur

(30) Priority: 25.02.2014 GB 201403267
(43) Date of publication of application: 26.08.2015
(73) Proprietor: Caterpillar Inc., Peoria, IL 61629 (US)
(72) Inventor: Hebrard de Veyrinas, Frederic, 38100 Grenoble (FR)
(74) Representative: Novagraaf Group

(56) References cited:
- WO-A1-95/19576
- US-A1- 2005 197 756
- US-A1- 2006 085 118
- US-A1- 2007 255 494
- US-A1- 2008 147 282
- US-B1- 6 804 587

## Description

### Technical Field

The present disclosure relates to a receiver assembly, and more specifically to a receiver assembly for a machine.

### Background

Construction machines such as tractors, graders, soil compactors and other machines may typically employ one or more receivers to perform diagnostic or other auxiliary functions during operation of the machine. The receivers may be, for example, GPS receivers to provide geographical information pertaining to a location of the machine. Typically, such receivers are mounted onto the machine at a considerable height from the ground surface. Conventional mounting systems used to mount the receivers onto the machine may include, for example, a long pole or shaft one end of which may be affixed to the machine while another end may hold the receiver.

In some cases, the receivers may have to be periodically removed and re-installed after operation of the machine to perform service routines thereon or for preventing theft of the receivers. However, in such cases, the operating or service personnel may find it cumbersome to install or remove the receivers with use of the conventional mounting systems.

US-A-2005/0197756 describes a method and system for performing non-contact based determination of the position of an implement for a mobile machine. The method uses a non-contact based measurement system to determine a first measurement relating to the position of an implement relative to the machine, determining a second measurement comprising the geographic position of the machine and determining the geographic position of the implement using the first and second measurement.

### Summary of the Disclosure

In one aspect of the present disclosure, a receiver assembly is provided for a machine. The receiver assembly comprises a mast; a receiver mounted on the mast for collecting, recording, storing, transmitting or receiving data pertaining to operation of a machine on a ground surface, for example a Global Positioning System (GPS) receiver, a Universal Target System (UTS) or a laser catcher; characterised by a bracket comprising: a base disposed on the machine; at least one arm extending from the base; a pivot pin disposed on the arm; wherein the mast is disposed alongside the arm and pivotally supported on the pivot pin; and a releasable attachment operable to enable the receiver to be attached to and removed from the mast, wherein the receiver together with the mast is pivotable about the pivot pin from an upright position to lower the receiver for removal from or installation onto the mast.

In another aspect of the present disclosure, a machine includes a frame, an implement connected to the frame and configured to operate on a ground surface, and a receiver assembly as described above disposed on the implement.

Other features and aspects of this disclosure will be apparent from the following description and the accompanying drawings.

### Brief Description of the Drawings

Figure 1 is a side view of an exemplary machine employing a receiver assembly in accordance with an embodiment of the present disclosure;
Figure 2 is a diagrammatic representation of the receiver assembly in an assembled state and an exploded state;
Figure 3 is a perspective view of the receiver assembly showing a stop plate and various components thereon;
Figure 4 is a diagrammatic representation of the receiver assembly in use by an operator of the machine;
Figure 5 is a diagrammatic representation of the receiver assembly having a one-arm configuration;
Figure 6 is a perspective view of a receiver assembly as example to understand the invention;
Figure 7 is an assembled view of the modified receiver assembly from Figure 6 showing a working of the modified receiver assembly as example to understand the invention;
Figure 8 is a rear perspective view of a receiver assembly as example to understand the invention;
Figure 9 is a front perspective view of a receiver assembly as example to understand the invention;
Figure 10 is an exemplary diagrammatic representation of a fastening mechanism employed between the bracket and the mast as example to understand the invention;
Figure 11 is an exemplary diagrammatic view of the machine employing receiver assemblies as example to understand the invention; and
Figure 12 is a perspective view of a receiver assembly as example to understand the invention;

### Detailed Description

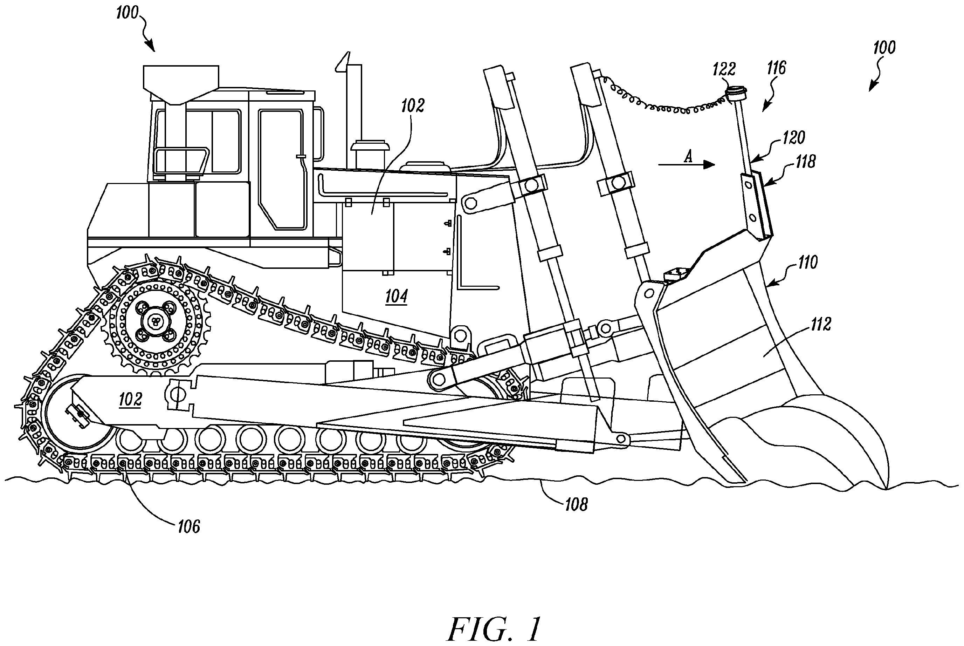

The present disclosure relates to a receiver assembly for a machine. Wherever possible the same reference numbers will be used throughout the drawings to refer to same or like parts. Figure 1 illustrates an exemplary machine 100 according to one aspect of the present disclosure. As illustrated, the machine 100 may embody a track-type tractor (TTT). The track-type tractor (TTT) disclosed herein may be an elevated sprocket TTT (as shown) or may optionally embody an oval drive TTT.

Alternatively, the machine 100 may be, for example, a snowplow, a backhoe loader, a skid steer loader, a wheel loader, a motor grader, a soil compactor and the like. Although a track-type tractor (TTT), a backhoe loader, a skid steer loader, a wheel loader, and a motor grader are disclosed herein, it may be noted that the machine 100 may be any wheeled or tracked vehicle employed in mining, agriculture, forestry, construction, shipping, and other industrial applications.

As illustrated in Figure 1, the exemplary machine 100 includes a frame 102. Further, the exemplary machine 100 may include a power source 104, and one or more ground engaging elements 106 mounted on the frame 102. The ground engaging elements 106 may be operatively coupled to the power source 104 by a transmission system such as a gearbox (not shown) and/or a propulsion system such as axles (not shown). The power source 104 may be configured to drive the ground engaging elements 106 during operation of the machine 100 such that the machine 100 is propelled on a ground surface 108.

The power source 104, disclosed herein, may include, for example, a diesel engine, a gasoline engine, a natural gas engine or any other type of engine commonly known in the art. The ground engaging elements 106 may be a pair of tracks (one track shown on one side of the machine 100). However, in alternative embodiments, the ground engaging elements 106 may be embodied as wheels.

The machine 100 further includes an implement 110 pivotally connected to the frame 102. The implement 110 is configured to operate on the ground surface 108. As illustrated in Figure 1, the implement 110 may embody a blade. For purposes of ease and clarity in understanding the present disclosure, the term "implement" will hereinafter be referred to as "the blade" and will be designated with the same numeral 110.

Although explanation to the present disclosure is hereinafter made with reference to the blade 110, it is to be noted that structures and methods of the present disclosure are equally applicable to other types of implements commonly known in the art. Other exemplary implements that may be used in lieu of the blade 110 may include, but is not limited to, excavating buckets, loading buckets, soil compacting drums, snow-pushers, or soil tillers. Therefore, a scope of the term "implement" is not limited to the blade 110 disclosed herein, rather the scope may extend to include other types of implements commonly known in the art. A person having ordinary skill in the art will hence, acknowledge that a type of the implement disclosed herein is merely exemplary in nature and hence, non-limiting of this disclosure.

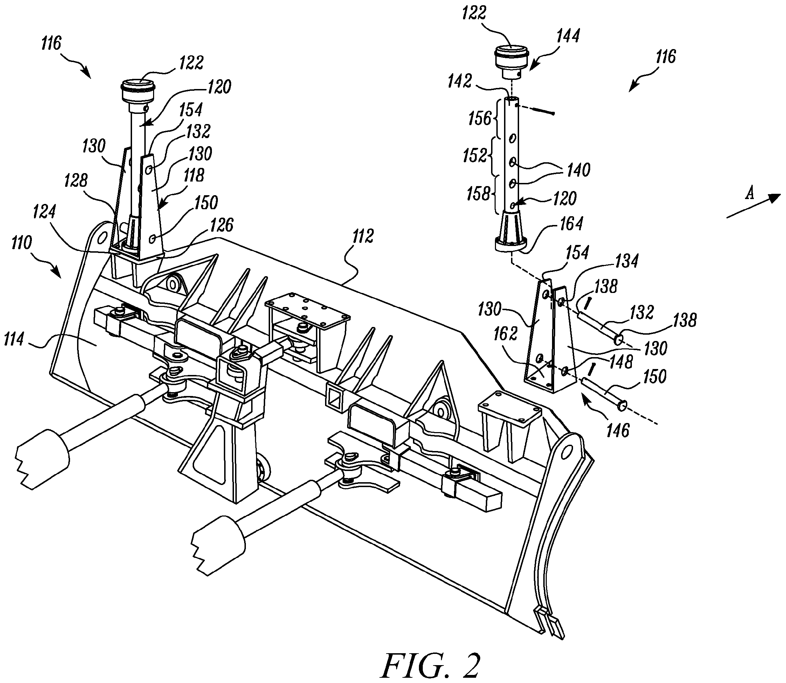

With reference to the specific embodiment of Figure 1, the blade 110 may include a front face 112 and a rear face 114 (shown in Figure 2). The front face 112 of the blade 110 may be configured to interface with earth materials on the ground surface 108 when the machine 100 is propelled in the forward direction "A". Accordingly, the front face 112 of the blade 110 may perform functions of moving, collecting, or transporting the earth materials on the ground surface 108. The earth materials, disclosed herein, may include oil, debris, snow, or ice, but is not limited thereto.

Referring to Figure 1, the machine 100 further includes a receiver assembly 116 disposed on the implement i.e. the blade 110. Although it is disclosed herein that the receiver assembly 116 is disposed on the blade 110, it should be noted that in other embodiments of the present disclosure, the receiver assembly 116 could be suitably located at any location of the machine 100 depending on the specific machine type and/or specific requirements of an application. For example, if the machine 100 is a soil compactor, the receiver assembly 116 may be located on a cab or a frame of the soil compactor.

Explanation pertaining to the receiver assembly 116 will now be made in conjunction with Figures 2-5. Referring to Figure 2, two receiver assemblies 116 are shown in an assembled and exploded state respectively. The receiver assembly 116 includes a bracket 118, a mast 120, and a receiver 122. The bracket 118 includes a base 124 horizontally disposed on the implement i.e. blade 110.

In an embodiment as shown in Figure 2, the base 124 may be disposed horizontally on a mounting pad 126 of the blade 110. The mounting pad 126 protrudes laterally from the rear face 114 of the blade 110 and provides a surface area for mounting of the base 124 thereon. The base 124 may be releasably attached to the mounting pad 126 by one or more fasteners 128. The fasteners 128 disclosed herein, may include, for example, setscrews, Allen screws, grub screws, hex bolts, rivets or any other type of fastener commonly known in the art to accomplish a releasable attachment between two components.

The bracket 118 further includes at least one arm 130 upstanding from the base 124 (two arms 130 shown upstanding from each bracket 118 in Figure 2). The bracket 118 further includes a pivot pin 132 transversely disposed on the arm 130. In an embodiment as shown in Figure 2, the pivot pin 132 may be inserted through co-axially located apertures 134 defined by the respective arms 130 of the bracket 118. The pivot pin 132 may extend, at least in part, outwardly from the arms 130 and one or both ends 138 of the pivot pin 132 may be provided with connector elements (not shown) for releasably securing the pivot pin 132 to the arms 130. With regards to the present disclosure, it is contemplated that the pivot pin 132 may be disposed in stationary relationship with the arms 130 and provides a substantially frictionless outer surface thereon.

Optionally, the arms 130 and/or the pivot pin 132 may be provided with respective interfitting or interlocking mechanisms (not shown) to accomplish the releasable securement of the pivot pin 132 to the arms 130. Accordingly, it is to be understood that a type of connector element is merely exemplary in nature and hence, non-limiting of this disclosure. The connector element, interfitting mechanism, or interlocking mechanism, disclosed herein, may include, for example, position retainers such as, but not limited to, wedges, keys, splines or other structures commonly known to a person ordinarily skilled in the art.

The mast 120 is disposed alongside the arm 130 and pivotally supported on the pivot pin 132. As shown in Figure 2, the two arms 130 are axially spaced apart along axis Z-Z' to receive the mast 120 therebetween. The mast 120 may define a lateral opening 140 disposed in axial alignment with the apertures 134 of the arms 130. The lateral opening 140 may be suitably sized and shaped to receive the pivot pin 132 therethrough. In an embodiment of the present disclosure, the lateral opening 140, disclosed herein, may be additionally provided with a bearing surface (not shown), for example, a journal, or a roller bearing press-fit therein, to help facilitate a smooth pivotal motion of the mast 120 about the pivot pin 132. Although one lateral opening 140 is described herein, the mast 120 may be optionally provided with multiple lateral openings 140 (as shown), explanation to which will be made later in this document.

The receiver 122 is releasably engaged to the mast 120 and is pivotable together with the mast 120 about the pivot pin 132. As shown in the exemplary embodiment of Figure 2, the receiver 122 is releasably engaged to a top end 142 of the mast 120. The releasable engagement between the receiver 122 and the mast 120 may be accomplished by suitable interfitting structures 144 disposed on the mast 120 and the receiver 122. The interfitting structures 144 may include bolts, screws, clamps, catches, holders, customized fixtures, or jigs, but is not limited thereto. Although some interfitting structures 144 are disclosed herein, it is to be noted that many suitable structures are commonly known in the art and may be implemented to form the interfitting structures 144 disclosed herein without deviating from the scope and spirit of the present disclosure. A person having ordinary skill in the art will therefore acknowledge that a type of interfitting structures employed to accomplish the aforesaid releasable engagement is merely exemplary in nature and non-limiting of this disclosure.

The receiver 122, disclosed herein, may be of a type configured to execute mainstream functions in the machine 100. However, in alternative embodiments, the receiver 122 may be of a type configured to perform support and/or auxiliary and/or diagnostic functions such as, but not limited to, collecting, recording, storing, transmitting, or receiving data pertaining to operation of the machine 100 on the ground surface 108. In one embodiment, the receiver 122 may be a Global Positioning System (GPS) receiver 122 configured to provide geographical information pertaining to a location of the machine 100.

In another embodiment, the receiver 122 may be a Universal Target System (UTS) configured to provide data pertaining to a profile, contour or elevation of the ground surface 108 (referring to Figure 1). In an alternative embodiment, the receiver 122 may be a laser catcher configured to provide articulation data of the implement 110. Although the GPS receiver 122, the UTS, and the laser catcher are disclosed herein, a type of receiver 122 used in the machine 100 is merely exemplary in nature and non-limiting of this disclosure. Any suitable receiver 122 may be employed by the machine 100 depending on specific requirements of an application and/or machine type.

As shown in Figure 2, the receiver assembly 116 may further include a locking assembly 146 located on the arm 130 and disposed in an axially offset relation to the pivot pin 132. The locking assembly 146 may be operable to lock the mast 120 in an upright position. Additionally, the locking assembly 146 may be operable to release the mast 120 from the upright position and thereafter allow the mast 120 to be pivoted about the pivot pin 132.

In the specific embodiment of Figure 2, the locking assembly 146 may include one or more holes 148 defined in the respective arms 130 of the bracket 118, and a locking pin 150 slidably received therethrough. The locking pin 150 may be substantially elongated such that when the locking pin 150 is inserted through the hole, the locking pin 150 extends at least partway between the arms 130 to retain the mast 120 in the upright position. However, upon removal of the locking pin 150 from the hole of the arm 130, the mast 120 may be rendered pivotable about the pivot pin 132. Although, the locking assembly 146 disclosed herein is implemented by way of the holes 148 and the locking pin 150, it is to be noted that other implementations of the locking assembly 146 are also possible and will be explained later in this document.

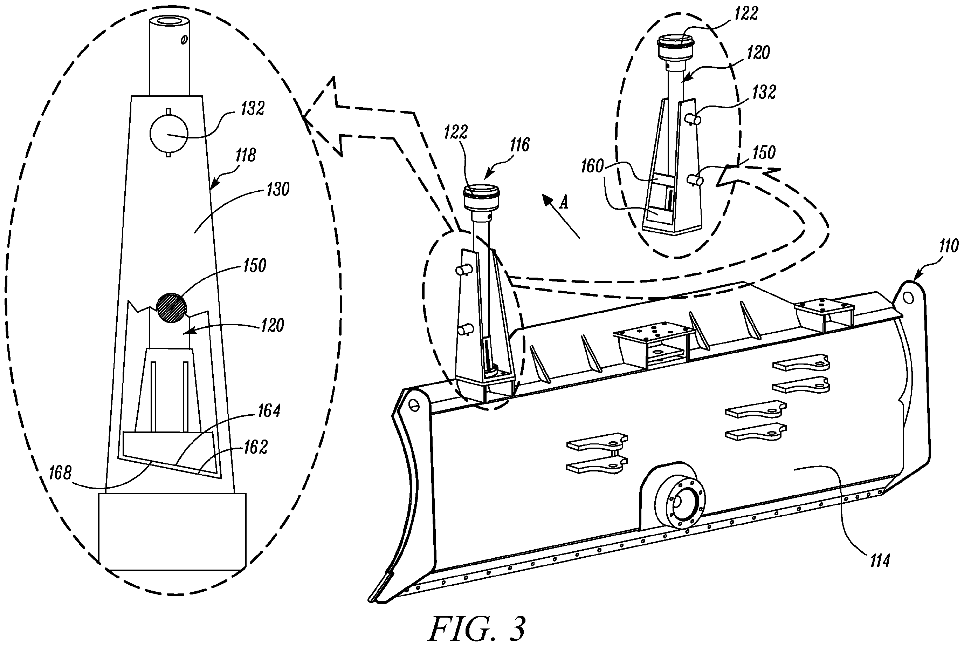

Turning to Figure 3, in an embodiment of the present disclosure, the arm 130 of the bracket 118 may preferably extend at least partway beyond a mid-portion 152 of the mast 120 and the pivot pin 132 may be located proximate to an upper end 154 of the arm 130. The aforesaid arrangement may allow a weight of the receiver 122 and the upper portion 156 of the mast 120 to be counterbalanced by a weight of a lower portion 158 of the mast 120. Moreover, if the mast 120 includes multiple lateral openings 140 along the mid-portion 152 thereof, then an effective height of the mast 120 (i.e. height of the mast 120 located outward of the bracket 118) can be suitably adjusted to obtain a desired counterbalance effect between the upper and lower portions 156, 158 of the mast 120. Thus, the mast 120 may be prevented from inadvertently swinging or pivoting about the pivot pin 132 and causing the receiver 122 to rapidly fall forward of the blade 110.

In an embodiment of the present disclosure, the bracket 118 may further include a stop plate 160 located adjacent to the base 124 and the arm 130. In an exemplary embodiment as shown in Figure 3, the stop plate 160 may extend partway along the base 124 and affix with the arms 130 of the bracket 118. The stop plate 160 may prevent a continuous pivotal motion of the mast 120 about the pivot pin 132. Further, the stop plate 160 may be additionally configured to prevent earth materials and/or other objects such as dirt, ice, or muck from entering the bracket 118 from operation of the blade 110 (See Figure 1). As shown in Figure 1, earth materials and/or other objects encountered at the front face 112 of the blade 110 during operation of the machine 100 may be prevented by the stop plate 160 from entering onto a top face 162 of the base 124. Consequently, the stop plate 160 may prevent the earth materials and/or other objects from settling onto the top face 162 of the base 124 and obstructing a positioning of the mast 120 above the base 124.

With continued reference to Figure 3, in an embodiment of the present disclosure, the top surface of the base 124 and a bottom end 164 of the mast 120 may be configured to define a clearance 166 therebetween. Beneficially, the top surface of the base 124 and the bottom end 164 of the mast 120 may be sloped downward, i.e. in the direction of pivoting of the mast 120, to facilitate free movement of the mast 120 relative to the base 124. Therefore, a slanted parting line 168 together with the clearance 166 may prevent any interference between the bottom end 164 of the mast 120 and the top surface of the base 124 during pivotal movement of the mast 120.

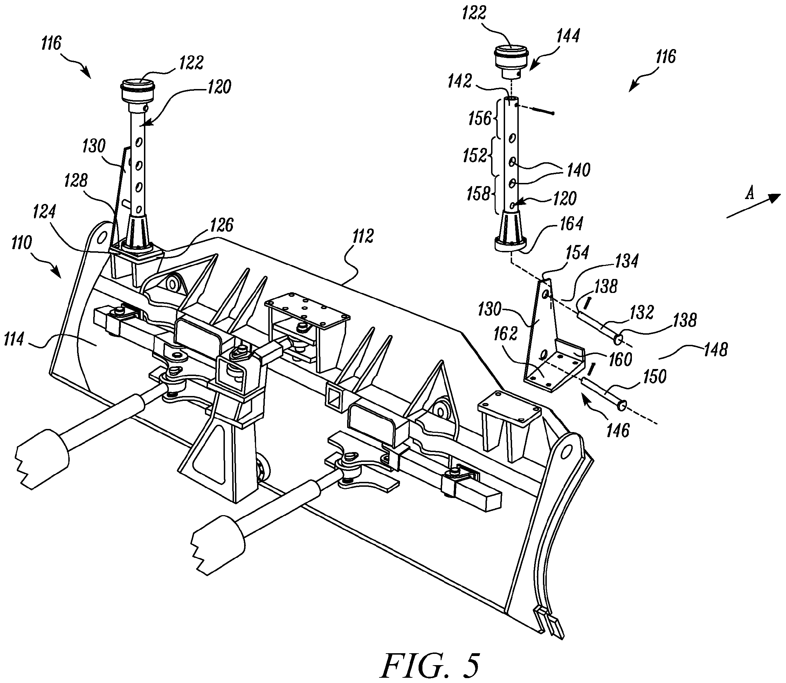

With reference to various embodiments of the present disclosure, although two arms 130 are disclosed as being part of the bracket 118, the present disclosure may be equally implemented with just one arm 130, or with more than one arm 130 as set forth in the claims. In an exemplary embodiment as shown in Figure 5, a single arm 130 may be disposed on the base 124 while the pivot pin 132 may laterally extend from the arm 130 to pivotally support the mast 120.

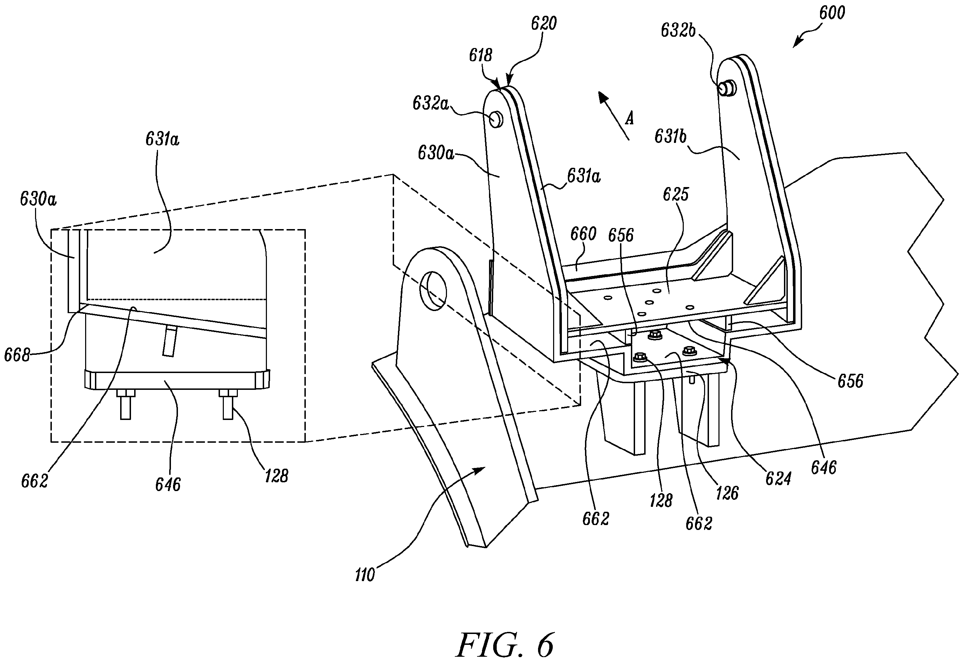

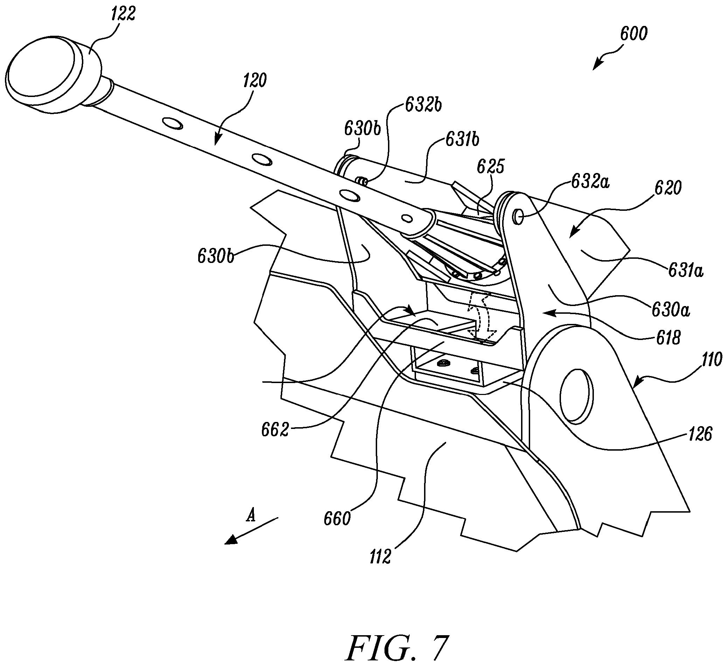

Figures 6 and 7 illustrate an example of a receiver assembly 600. Referring to Figure 6, the receiver assembly 600 includes a first bracket 618 having a fixed base 624 and two arms 630a and 630b upstanding from the fixed base 624. The fixed base 624 is configured to rigidly affix with the mounting pad 126 of the blade 110. As shown, the fixed base 624 can be releasably coupled to the mounting pad 126 with the help of fasteners 128. However, other structures and methods of fastening commonly known in the art may be suitably employed in lieu of the fasteners 128.

The receiver assembly 600 further includes a second bracket 620 pivotally connected to the first bracket 618. As shown in the examples of Figures 6 and 7, the second bracket 620 can include a pivotable base 625 having a pair of arms 631a and 631b upstanding therefrom. The arms 631a and 631b of the second bracket 620 can be disposed between the arms 630a and 630b of the first bracket 618. Moreover, the arm 631a may be pivotally coupled to the arm 630a with the help of pivot pin 632a while the arm 631b may be pivotally coupled to the arm 630b via pivot pin 632b. The pivot pins 632a and 632b can therefore allow relative movement of the second bracket 620 with respect to the first bracket 618. Further, the first bracket 618 may optionally include a stop plate 660 located adjacent to the fixed base 624 and the arms 630a and 630b. The stop plate 660 serves to prevent pivotal motion of the second bracket 620 upon contact therewith.

Furthermore, a bottom side 646 of the pivotable base 625 includes one or more ribs 656 extending therefrom. The ribs 656 may be provided for structural reinforcement of the second bracket 620. These ribs 656 are disposed facing a top surface 662 of the fixed base 624. The ribs 656 and the top surface 662 of the fixed base 624 can be beneficially sloped downward, i.e., in the direction of pivoting of the second bracket 620, to define a slanted parting line 668 therebetween and to facilitate free movement of the second bracket 620 relative to the first bracket 618. Therefore, upon assembly of the second bracket 620 and the first bracket 618, the slanted parting line 668 may prevent any interference between the ribs 656 and the fixed base 624 during pivotal movement of the second bracket 620 with respect to the first bracket 618.

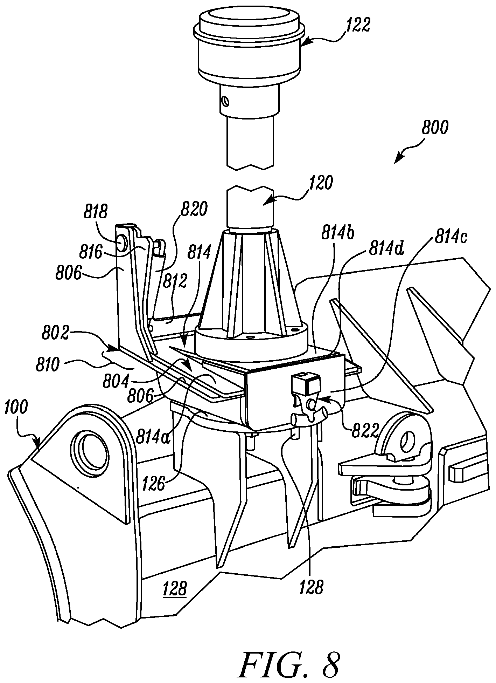

Moreover, examples of the locking assembly 146 described herein may be equally implemented in or applied to the one-arm configuration of the bracket 118 (as shown in Figure 5) or with the brackets 618, 620 depicted in the modified examples of Figures 8-9. For the sake of brevity in this document, it to be noted that a working of the receiver assembly 116 may be similarly related to, and applied in understanding a working of the receiver assembly 600. Accordingly, it is an aspect of the present disclosure that various configurations of the bracket 118 and/or the mast 120 may be suitably modified to accomplish pivoting of the mast 120 and the receiver 122 thereabout and to lower the receiver 122 preferably, forward of the blade 110 (i.e. towards the front face 112) without deviating from the scope of the present disclosure. References, if any, to specific numbers, shapes, sizes, and configurations of components in the receiver assembly 116 or 600 are to be taken in the illustrative and explanatory sense rather than being construed as limiting of this disclosure.

Moreover, although various components of the bracket 118 are described herein as being separate from each other and coupled using various mechanisms, it is also possible to have the components of the bracket 118 integrally formed with each other in order to impart a unitary and/or robust construction to the bracket 118.

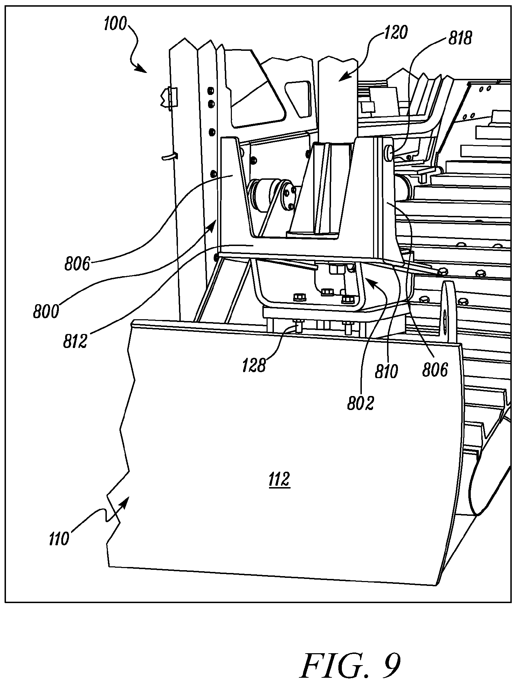

Figure 8 shows another example of a receiver assembly 800. As shown in this example the receiver assembly 800 can include a first bracket 802 and a second bracket 804. The first bracket 802 can include a fixed base 806 releasably fastened to the mounting pad 126 of the implement 110. The first bracket 802 can include a pair of arms 806 extending from the fixed base (only one arm visible in this view). The arms 806 may extend partway along a side 808 of the fixed base 806. Moreover, the arms 806, as shown in Figures 8 and 9, are disposed only on a forward portion 810 of the fixed base 806 and formed in combination with the stop plate 812. This configuration of the arms 806 can beneficially reduce material costs required to form the arms 806 while also rendering the arms 806 with adequate strength to pivotally support the second bracket 804 and the mast 120 thereon.

The second bracket 804 includes a pivotable base 814 and arms 816 extending from the pivotable base 814. The arms 816 of the second bracket 804 are disposed alongside and correspond to the arms 806 of the first bracket 802. The arms 816 of the second bracket 804 can be coupled to the arms 806 of the first bracket 802 with the help of pivot pins 818.

In an example as shown in Figure 8, the receiver assembly 800 can additionally include one or more retaining cylinders 820 disposed between the first bracket 802 and the second bracket 804. The retaining cylinders 820 can be pivotally coupled to the arms 806, and 816 of the first and second brackets 802, 804 respectively to facilitate controlled movement of the second bracket 804 relative to the first bracket 802. Moreover, the retaining cylinders 820 can beneficially offset forces that may be encountered by the pivot pins 818 from movement of the second bracket 804 relative to the first bracket 802.

Turning back to Figure 8, the pivotable base 814 has a first portion 814a, and a second portion 814b that is angled away from the first portion 814a. The first portion 814a is angled such that it abuts the fixed base 806 of the first bracket 802 when the mast 120 is in the upright position. The second portion 814b can be used to fasten the mast 120 thereon. The second portion 814b has a tab 814c angularly extending from an end 814d thereof.

In an example of the present disclosure, the receiver assembly 800 can include a locking assembly 822 disposed on the tab 814c of the pivotable base 814. As depicted in Figure 8, the locking assembly 822 is a spring-loaded latch that is operable between a latched and unlatched position. When the spring-loaded latch is in the latched position, it may prevent relative movement of the second bracket 804 with respect to the first bracket 802, while in the unlatched position; the spring-loaded latch may allow an operator to pivot the second bracket 804 about the pivot pins 818 and/or about the retaining cylinders 820. Although a spring-loaded latch is disclosed herein, other structures can be suitably implemented to form the locking assemblies 146 (see Figure 2), or 822 of the present disclosure. Some examples of such structures may include clamps, bolts, catch plates, spring-loaded lock-pins, or snap-fitting arrangements, but are not limited thereto. Therefore, reference to specific types and/or configurations of the locking assemblies 146, 822 is merely exemplary in nature and hence, non-limiting of this disclosure. Any suitable type and/or configuration of structures and components may be used to form the locking assemblies 146, or 822 depending on specific requirements of an application.

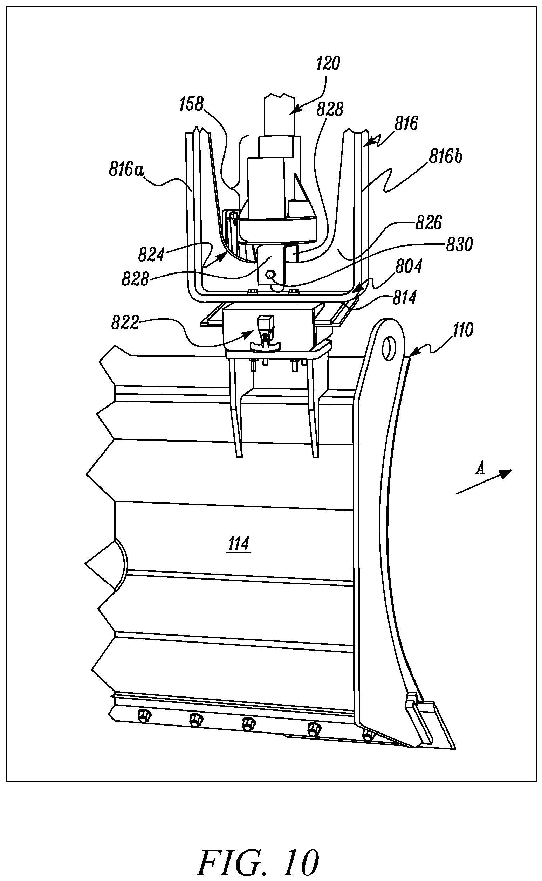

Referring to Figure 10, the receiver assembly 800 can include a fastening mechanism 824 to releasably fasten the mast 120 onto the second bracket 804. Accordingly, as shown, the second bracket 804 may be suitably modified to include an interconnecting member 826 disposed between the arms 816a, 816b (collectively designated as 816 herein) of the second bracket 804. In an example as shown in Figure 10, the interconnecting member 826 may be an arcuate plate formed integrally with the pivotable base 814 and the arms 816a, 816b. Alternatively, the interconnecting member 826 may be joined to the pivotable base 814 and the respective arms 816a, 816b by one or more methods commonly known in the art such as, but not limited to, welding, and brazing.

The receiver assembly 800 can further include a pair of legs 828 depending downwardly from the lower portion 158 of the mast 120. These legs 828 may be coupled to the interconnecting member 826 with the help of a pin 830 to accomplish a pivotal connection between the mast 120 and the pivotable base 814. The pivotal connection established by the pin 830 between the mast 120 and the pivotable base 814 may allow pivoting of the mast 120 in a plane different from that offered by the pivot pins 818 located between the first and second brackets 802, 804.

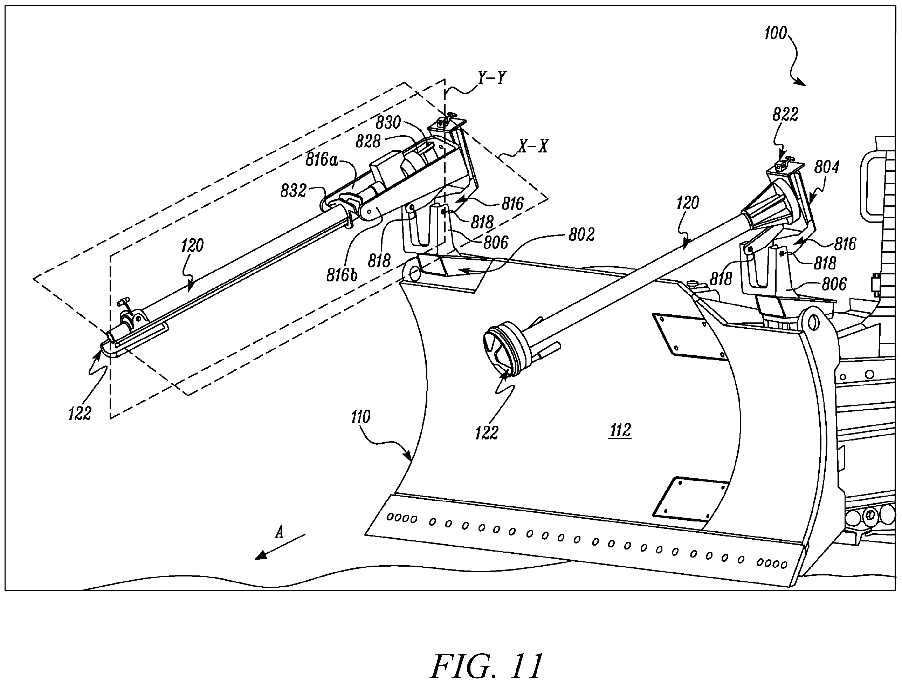

As shown in Figure 11, the pivot pins 818 between the first and second brackets 802, 804 can allow an operator (not shown) to pivot the mast 120 in the Y-Y plane, while the pin 830 between the interconnecting member 826 of the second bracket 804 and the legs 828 of the mast 120 can allow the operator to pivot the mast 120 in the X-X plane. Additionally, the receiver assembly can further include one or more shackles 832 that are operable to selectively permit movement of the mast 120 in the X-X plane. Specifically, the shackles 832 can be opened or closed by an operator to permit or restrict movement of the mast 120 in the X-X plane.

With continued reference to Figure 11, two receivers 122 are shown in association with the masts 120 respectively. The receiver 122 associated with the mast 120 (depicted on left hand side of Figure 11) may be a laser catcher while the receiver 122 associated with the mast 120 (depicted on right hand side of Figure 11) may be a GPS receiver. However, as disclosed earlier herein, the receiver assembly 800 can include any type of receiver 122 therein depending on specific requirements of the machine. Moreover, various embodiments of the receiver assembly 800 disclosed herein can be implemented onto a machine for mounting any known type of receiver without limiting a scope of the present disclosure.

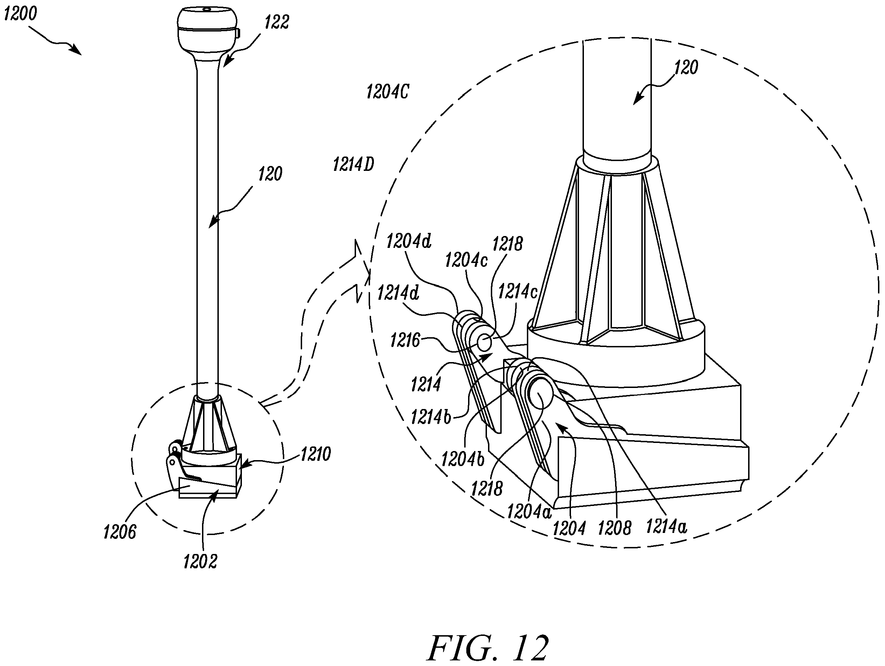

Referring to Figure 12, another modified example of the receiver assembly 1200 is depicted. In this example, the receiver assembly 1200 can include a first bracket 1202 having four arms 1204a, 1204b, 1204c, and 1204d (hereinafter collectively designated as 1204) angularly extending from a fixed base 1206. The four arms 1204 are grouped in pairs and located on either side of the first bracket 1202. Each of the four arms 1204 includes a hole 1208 that is co-axially aligned with holes 1208 provided on the other arms 1204.

The receiver assembly 1200 can further include a second bracket 1210 having a pivotable base 1212 and four arms 1214a, 1214b, 1214c, and 1214d (hereinafter collectively designated as 1214) angularly extending from the pivotable base 1212. The four arms 1214 are grouped in pairs and located on either side of the second bracket 1210. The arms 1214 of the second bracket 1210 include holes 1216 that correspond with holes 1208 on the arms 1204 of the first bracket 1202. Each grouped pair of arms 1214 of the second bracket 1210 may be interspersed and alternately arranged with the pair of arms 1204 of the first bracket 1202 such that the holes 1208 and 1216 on the arms 1204, 1214 of the first and second brackets 1202, 1210 align to receive one or more pivot pins 1218 therethrough. It is to be noted that although two pivot pins 1218 are illustrated in the example of Figure 12, any number of pivot pins 1218 can be employed depending on the configuration of the first and second brackets 1202, 1210 or other specific requirements of an application such as, but not limited to, load or strength.

With reference to various embodiments of the present disclosure, it is to be noted that types, configurations, and/or numbers of specific components of the receiver assembly disclosed herein are merely exemplary in nature, and hence non-limiting of this disclosure. A person having ordinary skill in the art will appreciate that the receiver assembly can be formed with one or more structures removed, one or more structures added, or with one or more structures suitably modified or replaced with alternative structures without deviating from the scope of the claims appended herein.

### Industrial Applicability

The receiver assembly 116, 600, 800 or 1200 of the present disclosure has applicability for implementation and use in many industrial settings such as machines for mining, construction, agriculture, forestry, and the like. Further, the receiver assembly 116, 600, 800 or 1200 may also be employed in machines that are used in outdoor civic or military applications such as clearing ice or snow and/or debris from roadways or other locations.

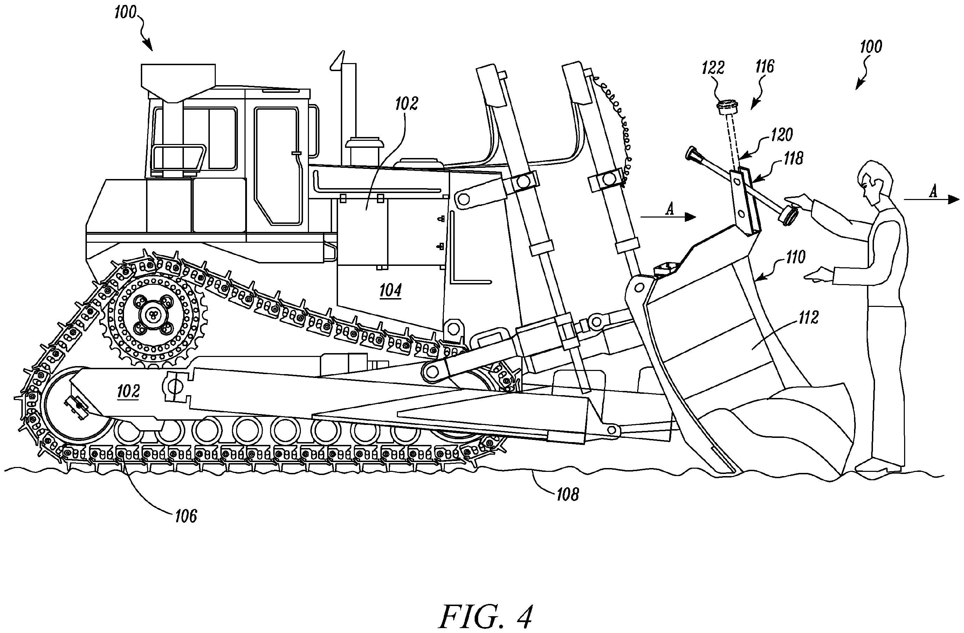

The working of the receiver assembly 116, 600, 800 or 1200 will now be described in detail. In order to accomplish removal or installation of the receiver 122 onto the machine 100, an operator or service personnel may stand on the ground surface 108 and pivot the mast 120 about the pivot pin 132 (see Figure 4), the second bracket 620 about the pivot pins 632a and 632b (see Figure 7), the second bracket 804 about the pivot pins 814 (see Figure 8), or the second bracket 1210 about the pivot pins 1218 (see Figure 12). Consequently, the operator may lower the receiver 122, preferably forward of the blade 110 i.e. towards the front face 112 of the blade 110. Thereafter, the operator may conveniently remove or re-install the receiver 122 onto the mast 120 since the upper end 154 of the mast 120 and/or the receiver 122 is now within the reach of the operator (See Figure 4).

Referring to Figure 4, the configurations and sizes of the bracket 118 and the mast 120 together with the location of the pivot pin 132 from various embodiments disclosed herein may beneficially provide the desired counterbalance effect between the upper and lower portions 156, 158 of the mast 120. The counterbalance effect may prevent the mast 120 from inadvertently swinging or pivoting about the pivot pin 132 and causing the receiver 122 to rapidly fall forward of the blade 110. Therefore, the operator may have control of the mast 120 and the receiver 122 while turning or pivoting the mast 120 about the pivot pin 132.

In cases such as, but not limited to, service routines of the machine 100, or idle-time of the machine 100, the operator may quickly remove the receiver 122 with use of the disclosed embodiments of the receiver assembly 116, 600, 800 or 1200. Similarly, in order to install the receiver 122 onto the machine 100 before operation hours of the machine 100, the operator may quickly repeat the process as disclosed for removal but with steps for engaging the receiver 122 to the mast 120. It is evident from the present disclosure that the pivotal configuration of the receiver assembly 116, 600, 800 or 1200 may reduce time and effort taken by the personnel to perform removal or installation of the receiver 122 onto the machine 100. Consequently, implementation of the present receiver assembly 116 may reduce fatigue experienced by the personnel in performing frequent or periodic removal or installation of the receiver 122 onto the machine 100.

Directional references (e.g. upper, lower, upward, downward, leftward, rightward, top, bottom, above, below, beside, upright, horizontal, clockwise, counter-clockwise), if present in this disclosure, is only used for identification purposes to aid the reader's understanding of the present disclosure, and may not create limitations, particularly as to the position, orientation, or use of the components and/or methods disclosed herein. Joinder references (e.g. attached, coupled, connected, hinged, affixed, engaged, and the like) are to be construed broadly and may include intermediate members between the disclosed components. As such, joinder references do not necessarily infer that two components are directly connected or are in fixed relation to each other.

Similarly, adjectives and/or verbs, such as, but not limited to, "modified", "articulated", "pivotal" or similar, should be construed broadly and only as nominal, and may not create any limitations particularly as to the description, operation, or use unless specifically set forth in the claims.

While aspects of the present disclosure have been particularly shown and described with reference to the embodiments above, it will be understood by those skilled in the art that various additional embodiments may be contemplated by the modification of the disclosed machines, systems and methods. Such embodiments should be understood to fall within the scope of the present disclosure as determined based upon the claims and any equivalents thereof.

## Claims

1. A receiver assembly (116) for a machine (100) like a tracked vehicle employed in mining, agriculture, forestry, construction or shipping, the receiver assembly (116) comprising:
a mast (120);
a receiver (122) mounted on the mast (120) for collecting, recording, storing, transmitting or receiving data pertaining to operation of a machine (100) on a ground surface, for example a Global Positioning System (GPS) receiver, a Universal Target System (UTS) or a laser catcher;
**characterised by** a bracket (118) comprising:
a base (124) disposed on the machine (100);
at least one arm (130) extending from the base (124);
a pivot pin (132) disposed on the arm (130);
wherein the mast (120) is disposed alongside the arm (130) and pivotally supported on the pivot pin (132); and
a releasable attachment (144) operable to enable the receiver (122) to be attached to and removed from the mast (120),
wherein the receiver (122) together with the mast (120) is pivotable about the pivot pin (132) from an upright position to lower the receiver (122) for removal from or installation onto the mast (120).

2. The receiver assembly (116) of claim 1, wherein the arm (130) extends at least partway beyond a mid-portion of the mast (120).

3. The receiver assembly (116) of claim 2, wherein the pivot pin (132) is proximate to an upper end of the arm (130).

4. The receiver assembly (116) of claim 1, wherein an upper portion of the mast (120) is counterbalanced by a lower portion of the mast (120).

5. The receiver assembly (116) of claim 1 further including a locking assembly (146) located on the arm (130) and offset from the pivot pin (132), the locking assembly (146) operable to lock the mast (120) in an upright position.

6. The receiver assembly (116) of claim 5, wherein the locking assembly (146) is further operable to pivot the mast (120) and the receiver (122) about the pivot pin (132).

7. The receiver assembly (116) of claim 1, wherein the bracket (118) further includes a stop plate (160) located adjacent to the base (124) and the arm (130), the stop plate (160) configured to prevent a continuous pivotal motion of the mast (120) about the pivot pin (132).

8. The receiver assembly (116) of claim 1, wherein a top surface (162) of the base (124) and a bottom end (164) of the mast (120) together define a clearance therebetween.

9. The receiver assembly (116) of claim 1, wherein the receiver (122) is releasably engaged to a top end (142) of the mast (120).

10. A machine (100) comprising:
a frame (102);
an implement (110) connected to the frame (102), the implement (110) configured to operate on a ground surface (108);
a receiver assembly (116) as claimed in any one of the preceding claims disposed on the implement (110).

11. The machine (100) of claim 10, wherein the arm (130) extends at least partway beyond a mid-portion of the mast (120).

12. The machine (100) of claim 10, wherein the receiver assembly (116) further includes a locking assembly (146) located on the arm (130) and offset from the pivot pin (132), the locking assembly (146) operable to lock the mast (120) in an upright position.

13. The machine (100) of claim 10, wherein the bracket (118) further includes a stop plate (160) located adjacent to the base (124) and the arm (130), the stop plate (160) configured to limit a bi-directional rotation of the mast (120) about the pivot pin (132).

14. The machine (100) of claim 10, wherein the receiver (122) is releasably engaged to a top end of the mast (120).

15. The machine (100) of claim 10, wherein the receiver (100) is at least one of a Global Positioning System (GPS) receiver, a Universal Target System (UTS), and a laser catcher.

## Patentansprüche

1. Empfängeranordnung (116) für eine Maschine (100), wie ein Raupenfahrzeug, das in Bergbau, Landwirtschaft, Forstwirtschaft, Bauwesen oder Transport eingesetzt wird, wobei die Empfängeranordnung (116) umfasst:
einen Mast (120);
einen Empfänger (122), der an dem Mast (120) montiert ist, um Daten, die den Betrieb einer Maschine (100) auf einer Bodenoberfläche betreffen, aufzunehmen, aufzuzeichnen, zu speichern, zu übertragen oder zu empfangen, zum Beispiel ein Global Positioning System-Empfänger (GPS-Empfänger), ein Universal-Zielsystem (UTS) oder ein Laserfänger;
**gekennzeichnet durch** eine Halterung (118), die umfasst:
eine Basis (124), die an der Maschine (100) angeordnet ist;
mindestens einen Arm (130), der sich von der Basis (124) erstreckt;
einen Schwenkstift (132), der an dem Arm (130) angeordnet ist;
wobei der Mast (120) entlang des Arms (130) angeordnet und schwenkbar an dem Schwenkstift (132) gelagert ist; und
eine lösbare Befestigung (144), die betriebsfähig ist, um zu ermöglichen, dass der Empfänger (122) an dem Mast (120) befestigt und von diesem entfernt wird,
wobei der Empfänger (122) zusammen mit dem Mast (120) um den Schwenkstift (132) von einer aufrechten Position schwenkbar ist, um den Empfänger (122) zum Entfernen von dem Mast oder zur Installation auf den Mast (120) zu senken.

2. Empfängeranordnung (116) nach Anspruch 1, wobei sich der Arm (130) mindestens teilweise über einen mittleren Abschnitt des Masts (120) hinaus erstreckt.

3. Empfängeranordnung (116) nach Anspruch 2, wobei der Schwenkstift (132) nahe einem oberen Ende des Arms (130) ist.

4. Empfängeranordnung (116) nach Anspruch 1, wobei ein oberer Abschnitt des Masts (120) durch einen unteren Abschnitt des Masts (120) ausgeglichen wird.

5. Empfängeranordnung (116) nach Anspruch 1, die ferner eine Verriegelungsanordnung (146) einschließt, die sich an dem Arm (130) befindet und von dem Schwenkstift (132) versetzt ist, wobei die Verriegelungsanordnung (146) betriebsfähig ist, um den Mast (120) in einer aufrechten Position zu verriegeln.

6. Empfängeranordnung (116) nach Anspruch 5, wobei die Verriegelungsanordnung (146) ferner betriebsfähig ist, um den Mast (120) und den Empfänger (122) um den Drehstift (132) herum zu schwenken.

7. Empfängeranordnung (116) nach Anspruch 1, wobei die Halterung (118) ferner eine Anschlagplatte (160) einschließt, die angrenzend an die Basis (124) und den Arm (130) angeordnet ist, wobei die Anschlagplatte (160) konfiguriert ist, um eine kontinuierliche Schwenkbewegung des Masts (120) um den Schwenkstift (132) herum zu verhindern.

8. Empfängeranordnung (116) nach Anspruch 1, wobei eine obere Oberfläche (162) der Basis (124) und ein unteres Ende (164) des Masts (120) zusammen einen Zwischenraum dazwischen definieren.

9. Empfängeranordnung (116) nach Anspruch 1, wobei der Empfänger (122) lösbar mit einem oberen Ende (142) des Masts (120) in Eingriff steht.

10. Maschine (100), umfassend:
einen Rahmen (102);
ein Arbeitsgerät (110), das mit dem Rahmen (102) verbunden ist, wobei das Arbeitsgerät (110) konfiguriert ist, um auf einer Bodenoberfläche (108) zu arbeiten;
eine Empfängeranordnung (116) nach einem der vorstehenden Ansprüche, die auf dem Arbeitsgerät (110) angeordnet ist.

11. Maschine (100) nach Anspruch 10, wobei sich der Arm (130) mindestens teilweise über einen mittleren Abschnitt des Masts (120) hinaus erstreckt.

12. Maschine (100) nach Anspruch 10, wobei die Empfängeranordnung (116) ferner eine Verriegelungsanordnung (146) einschließt, die sich an dem Arm (130) befindet und von dem Schwenkstift (132) versetzt ist, wobei die Verriegelungsanordnung (146) betriebsfähig ist, um den Mast (120) in einer aufrechten Position zu verriegeln.

13. Maschine (100) nach Anspruch 10, wobei die Halterung (118) ferner eine Anschlagplatte (160) einschließt, die angrenzend an die Basis (124) und den Arm (130) angeordnet ist, wobei die Anschlagplatte (160) konfiguriert ist, um eine bidirektionale Drehung des Masts (120) um den Schwenkstift (132) zu begrenzen.

14. Maschine (100) nach Anspruch 10, wobei der Empfänger (122) mit einem oberen Ende des Masts (120) lösbar in Eingriff steht.

15. Maschine (100) nach Anspruch 10, wobei der Empfänger (100) mindestens eines von einem Global Positioning System-Empfänger (GPS-Empfänger), einem Universal-Zielsystem (UTS) und einem Laserfänger ist.

## Revendications

1. Ensemble récepteur (116) pour un engin (100) tel qu'un véhicule à chenilles utilisé en exploitation minière, agriculture, foresterie, construction ou transport, l'ensemble récepteur (116) comprenant :
un mât (120) ;
un récepteur (122) monté sur le mât (120) pour collecter, enregistrer, stocker, transmettre ou recevoir des données se rapportant à un fonctionnement d'un engin (100) sur une surface de sol, par exemple un récepteur de système de positionnement global (GPS), un système de cible universelle (UTS) ou un capteur laser ;
**caractérisé par** un support (118) comprenant :
une base (124) disposée sur l'engin (100) ;
au moins un bras (130) s'étendant à partir de la base (124) ;
un axe de pivotement (132) disposé sur le bras (130) ;
dans lequel le mât (120) est disposé à côté du bras (130) et supporté de façon pivotante sur l'axe de pivotement (132) ; et
une fixation libérable (144) fonctionnelle pour permettre au récepteur (122) d'être fixé au mât et retiré du mât (120),
dans lequel le récepteur (122) conjointement avec le mât (120) peut pivoter autour l'axe de pivotement (132) depuis une position dressée pour abaisser le récepteur (122) pour le retirer du mât ou l'installer sur le mât (120).

2. Ensemble récepteur (116) selon la revendication 1, dans lequel le bras (130) s'étend au moins à mi-chemin au-delà d'une partie médiane du mât (120).

3. Ensemble récepteur (116) selon la revendication 2, dans lequel l'axe de pivotement (132) est à proximité d'une extrémité supérieure du bras (130).

4. Ensemble récepteur (116) selon la revendication 1, dans lequel une partie supérieure du mât (120) est contrebalancée par une partie inférieure du mât (120).

5. Ensemble récepteur (116) selon la revendication 1 incluant en outre un ensemble de verrouillage (146) localisé sur le bras (130) et décalé de l'axe de pivotement (132), l'ensemble de verrouillage (146) fonctionnel pour verrouiller le mât (120) dans une position dressée.

6. Ensemble récepteur (116) selon la revendication 5, dans lequel l'ensemble de verrouillage (146) est en outre fonctionnel pour pivoter le mât (120) et le récepteur (122) autour de l'axe de pivotement (132).

7. Ensemble récepteur (116) selon la revendication 1, dans lequel le support (118) inclut en outre une plaque d'arrêt (160) localisée adjacente à la base (124) et au bras (130), la plaque d'arrêt (160) configurée pour empêcher un mouvement pivotant continu du mât (120) autour de l'axe de pivotement (132).

8. Ensemble récepteur (116) selon la revendication 1, dans lequel une surface supérieure (162) de la base (124) et une extrémité inférieure (164) du mât (120) définissent ensemble un dégagement entre eux.

9. Ensemble récepteur (116) selon la revendication 1, dans lequel le récepteur (122) est mis en prise de manière libérable avec une extrémité supérieure (142) du mât (120).

10. Engin (100), comprenant :
un châssis (102) ;
un outil (110) connecté au châssis (102), l'outil (110) configuré pour fonctionner sur une surface de sol (108) ;
un ensemble récepteur (116) tel que revendiqué dans l'une quelconque des revendications précédentes disposé sur l'outil (110).

11. Engin (100) selon la revendication 10, dans lequel le bras (130) s'étend au moins à mi-chemin au-delà d'une partie médiane du mât (120).

12. Engin (100) selon la revendication 10, dans lequel l'ensemble récepteur (116) inclut en outre un ensemble de verrouillage (146) localisé sur le bras (130) et décalé de l'axe de pivotement (132), l'ensemble de verrouillage (146) fonctionnel pour verrouiller le mât (120) dans une position dressée.

13. Engin (100) selon la revendication 10, dans lequel le support (118) inclut en outre une plaque d'arrêt (160) localisée adjacente à la base (124) et au bras (130), la plaque d'arrêt (160) configurée pour limiter une rotation bidirectionnelle du mât (120) autour de l'axe de pivotement (132).

14. Engin (100) selon la revendication 10, dans lequel le récepteur (122) est mis en prise de manière libérable avec une extrémité supérieure du mât (120).

15. Engin (100) selon la revendication 10, dans lequel le récepteur (100) est au moins un parmi un récepteur de système de positionnement global (GPS), un système de cible universelle (UTS), et un capteur laser.
